# EUROPEAN PATENT APPLICATION

(11) **EP 1 679 633 A1**
(43) Date of publication of application: **12.07.2006**
(21) Application number: 06000221.9
(22) Date of filing: 05.01.2006
(51) Int. Cl.: G06F 21/00

(54) **Method for enhancing a digital rights management function of a data terminal**

(30) Priority: 08.01.2005 KR 2005001936
(71) Applicant: LG Electronics Inc., Yongdungpo-Gu Seoul 150-010 (KR)
(72) Inventor: Kyoo-Chul, Choi, Dongan-Gu Anyang Gyeonggi-Do (KR)
(74) Representative: Katérle, Axel

(57) **Abstract**

Disclosed is a method for enhancing a digital rights management (DRM) function of a data terminal which includes receiving a request to reset a real-time clock (RTC), receiving an updated RTC time from a user, calculating and storing a difference value corresponding to a difference between a current RTC time and the updated RTC time, and setting a current time of the data terminal based on the updated RTC time and the stored difference value.

## Description

### BACKGROUND OF THE INVENTION

### 1. Field of the Invention

The present invention relates to a data terminal and, more particularly, to a method for enhancing a digital rights management (DRM) function of a data terminal by preventing unauthorized use of data content.

### 2. Description of the Related Art

Users of data terminals, such as computers and mobile communication terminals, often download data content from the Internet, such as music files, movie files, games, and data applications, to run on their data terminals. The content providers that make this data content available to the users typically charge for the use of this data content. DRM is an important field relating to the distribution of digital work. DRM generally refers to the techniques used to protect the rights of data content providers in their digital work. DRM is a function that is used to prevent piracy (or illegal copying), monitor usage, and to manage the charging and payment of user fees.

Some data content may have an expiration period. To monitor whether the data content has expired, when a data terminal downloads data content, the data terminal stores, in memory, the download time and date at which the data content was downloaded. The data terminal then determines an expiration date and time based upon the download date and time.

To determine whether data content has expired, the data terminal compares the expiration date and time to a current date and time, which is tracked by a real-time clock (RTC) of the data terminal. If the data terminal determines that the current date and time is later than the expiration date and time, then a DRM function of the data terminal prevents further usage of the data content.

However, with the related art data terminals, a user may avoid the DRM usage restriction function by resetting the RTC of the data terminal to an earlier date and time, thus extending the use of the data content without authorization from the content provider.

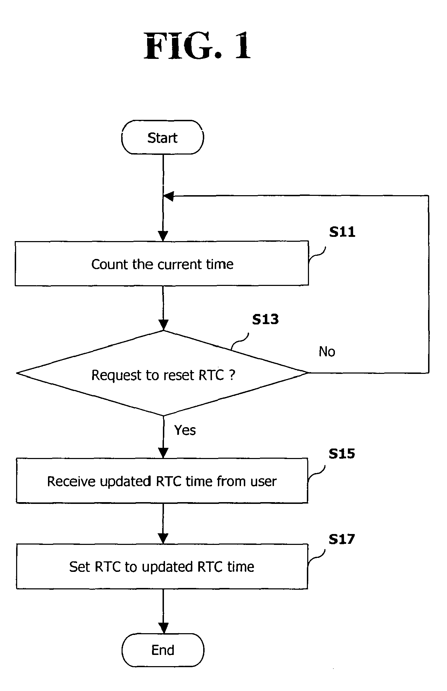

A related art method of resetting a data terminal's RTC is described below with reference to Figure 1.

As shown in Figure 1, a related art method of resetting a data terminal's RTC includes: counting a current time (step S11); determining whether a user wishes to reset the RTC (step S13); receiving an updated RTC time from the user if the user wishes to reset the RTC (step S15); and setting the RTC to the updated RTC time received from the user (step S17).

By resetting the RTC of the data terminal according to the above-described related art method to an earlier date and time, a user may obtain an unauthorized extended period of use of the data content.

### SUMMARY OF THE INVENTION

In view of the foregoing, the present invention, through one or more of its various aspects, embodiments, and/or specific features or sub-components, is thus intended to bring out one or more of the advantages as specifically noted below.

An object of the present invention is to provide a method for enhancing a DRM function of a data terminal, which prevents a user from obtaining an unauthorized extended period of use of data content when the user resets a RTC of a data terminal.

To achieve at least the above objects in whole or in parts, there is provided a method for enhancing a digital rights management (DRM) function of a data terminal which includes receiving a request to reset a real-time clock (RTC), receiving an updated RTC time from a user, calculating and storing a difference value corresponding to a difference between a current RTC time and the updated RTC time, and setting a current time of the data terminal based on the updated RTC time and the stored difference value.

The method may also include determining whether data content can be used based on the current time and a predetermined expiration time of the data content. Determining whether data content can be used may include determining whether the current time is later than the predetermined expiration time, prohibiting usage of the data content if the current time is later than the predetermined expiration time, and allowing usage of the data content if the current time is earlier than the predetermined expiration time of the data content.

The current time corresponds to a sum of the updated RTC time and the stored difference value. The data content may include at least one of a music file, a movie file, a game file, and a data application. The predetermined expiration time of the data content may be based on a time value set by a provider of the data content. The data terminal may include a mobile communication terminal that operates in at least one of a GSM system and a WCDMA system, a mobile phone, a PDA, or a computer.

According to another aspect, there is provided a data terminal having an enhanced DRM which includes a receiver that receives a request to reset an RTC and an updated RTC time from a user, a calculator that calculates and stores a difference value corresponding to a difference between a current RTC time and the updated RTC time, and a current time setter that sets a current time of the data terminal based on the updated RTC time and the stored difference value.

The data terminal may also include a determiner that determines whether data content can be used based on the current time and a predetermined expiration time of the data content. The determiner may determine whether the current time is later than the predetermined expiration time, prohibit usage of the data content if the current time is later than the predetermined expiration time, and allow usage of the data content if the current time is earlier than the predetermined expiration time of the data content.

The current time corresponds to a sum of the updated RTC time and the stored difference value. The data content may include at least one of a music file, a movie file, a game file, and a data application. The predetermined expiration time of the data content may be based on a time value set by a provider of the data content. The data terminal may include a mobile communication terminal that operates in at least one of a GSM system and a WCDMA system, a mobile phone, a PDA, or a computer.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The present invention is further described in the detailed description that follows, by reference to the noted drawings by way of non-limiting examples of embodiments of the present invention, in which like reference numerals represent similar parts throughout several views of the drawings, and in which:
Figure 1 is a flow chart of a related art method of resetting a data terminal's RTC; and
Figure 2 is a flow chart of a method for enhancing a DRM function of a data terminal according to an embodiment of the present invention.

### DETAILED DESCRIPTION OF THE PREFERRED EMBODIMENTS

A method for enhancing a DRM function of a data terminal, which prevents a user from obtaining an unauthorized extended period of use of data content by resetting a RTC of a data terminal, is described below with reference to the accompanying drawings.

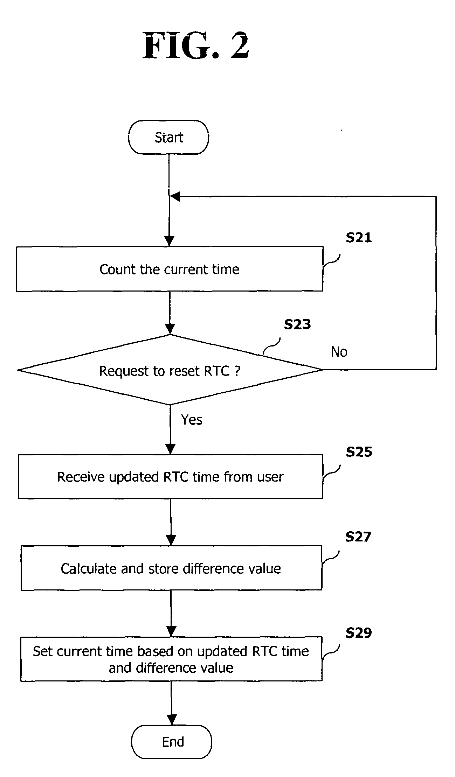

Figure 2 illustrates a flow chart of a method for enhancing a DRM function of a data terminal according to one embodiment of the present invention. The method may be performed by any data terminal which utilizes a RTC and performs a DRM function for managing digital work, such as, but not limited to, a desktop computer, a notebook computer, a mobile phone, a personal digital assistant (PDA), and other types of mobile communication terminals. Further, the described method may be implemented by a program stored on a computer-readable medium.

As shown in Figure 2, a method for enhancing a DRM function of a data terminal according to an embodiment of the present invention includes: counting, by a RTC, a current time (step S21); determining whether a user wishes to reset the RTC (step S23); receiving an updated RTC time from the user if the user wishes to reset the RTC (step S25); calculating and storing a difference value corresponding to a difference between a current RTC time and the updated RTC time (step S27); and setting a current time of the data terminal based on the updated RTC time and the stored difference value (step S29). The method is described in more detail as follows.

The data terminal includes an RTC, which keeps track of the current date and time by continuously counting (step S21). The data terminal can display the current date and time tracked by the RTC on a display of the data terminal.

In one embodiment, the data terminal may be a mobile communication terminal. Mobile communication terminals which communicate by asynchronous transmission, such as those that operate in a Global System for Mobile communication (GSM) or Wideband Code Division Multiple Access (WCDMA) system, generally do not receive periodic time information from neighboring base stations, and thus rely on an internal RTC. Examples of such mobile communication terminals include, but are not limited to mobile phones, PDAs, and notebook computers.

According to the method, the data terminal determines whether the user wishes to reset the RTC, by determining whether the data terminal has received a request to reset the RTC (step S23). The user may enter the request to reset the RTC by pressing one or more keys, or by otherwise manipulating any other suitable input unit of the data terminal. The user then enters an updated RTC time, which is received by the data terminal (step S25).

The data terminal calculates the difference between the current RTC time and the updated RTC time entered by the user, and stores this difference as a difference value (step S27). The data terminal then updates the time of the RTC to the updated RTC time entered by the user, and then sets a true "current time" of the data terminal (step S29). The current time is set as the sum of the updated RTC time and the difference value. Thus, when the user changes the RTC to an updated RTC time, the data terminal is able to keep track of a separate, true "current value", which corresponds to the time the RTC would have read were it not updated by the user.

Referring again to Figure 2, if the data terminal has not received a request to reset the RTC (step S23, NO), the RTC continues to count the current time (step S21).

According to one embodiment, when data content is downloaded to the data terminal, the data terminal stores the download date and time at which the data content was downloaded. Included with the downloaded data content is a predetermined expiration period set by the data content provider which provided the data content. The data terminal then determines an expiration date and time by summing the download date and time with the expiration period. According to an alternate embodiment, rather than providing an expiration period, the content provider provides an expiration date and time with the data content, thus eliminating the need for the data terminal to calculate this value. The data content downloaded to the data terminal may include, but is not limited to, a music file, a movie file, a game file, or a data application, which can be limited in its usage time by the content provider.

When a user attempts to use data content downloaded to a data terminal, a DRM function of the data terminal determines whether an authorized usage period has expired. The DRM function makes this determination by comparing the current time and date (rather than the updated RTC time) with the predetermined expiration time and date stored in the memory of the data terminal. If the current date and time is later than the predetermined date and time, the data terminal prohibits usage of the data content, whereas if the current date and time is earlier than the predetermined date and time, the data terminal allows usage of the data content.

As an example, if a user downloads an MP3 (MPEG audio layer 3) file having an expiration period of three days at 1:00 a.m. on December 1, 2004, the data terminal determines that the expiration date and time is 1:00 a.m. on December 4, 2004, by summing the download date and time (1:00 a.m., December 1, 2004) with the expiration period (three days). The expiration date and time is stored in memory of the data terminal.

If the user attempts to play the MP3 file at 2:00 a.m. on December 4, 2004, the DRM function of the data terminal will prohibit this, as the current time of the data terminal (2:00 a.m., December 4, 2004) is later than the expiration date and time (1:00 a.m., December 4, 2004). If, at 2:00 a.m. on December 4, 2004, the user resets the RTC clock from 2:00 a.m., December 4, 2004 to 2:00 a.m., December 3, 2004, the data terminal calculates the difference between the current RTC time (2:00 a.m., December 4, 2004) and the updated RTC time (2:00 a.m., December 3, 2004), which it determines is 24 hours, and stores this difference value in memory. The data terminal then resets the RTC time to the updated RTC time (2:00 a.m., December 3, 2004).

Although the RTC has been updated, the data terminal also tracks the true current time, which is the sum of the updated RTC time and the stored difference value (24 hours). The data terminal can be set to display either the updated RTC time or the true current time.

If, after resetting the RTC to 2:00 a.m., December 3, 2004, the user attempts to play the MP3 file, the user will be prohibited from doing so, even though the RTC is earlier than the predetermined expiration date and time (1:00 a.m., December 4, 2004), since the DRM function of the data terminal compares the predetermined expiration date and time with the true current time, rather than the updated RTC.

The method described above for enhancing a DRM function of a data terminal prevents an unauthorized extension of data content usage, by keeping track of a true current time even when an RTC time has been reset by a user.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

In an embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionalities as described herein.

The present disclosure contemplates a computer-readable medium that includes instructions or receives and executes instructions responsive to a propagated signal. The term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is equivalent to a tangible storage medium. Accordingly, the disclosure is considered to include any one or more of a computer-readable medium or a distribution medium and other equivalents and successor media, in which data or instructions may be stored.

Although the present specification describes components and functions that may be implemented in particular embodiments with reference to particular standards and protocols, the invention is not limited to such standards and protocols. Each of the standards, protocols and languages represent examples of the state of the art. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to several exemplary embodiments, it is understood that the words that have been used are words of description and illustration, rather than words of limitation. As the present invention may be embodied in several forms without departing from the spirit or essential characteristics thereof, it should also be understood that the above-described embodiments are not limited by any of the details of the foregoing description, unless otherwise specified. Rather, the above-described embodiments should be construed broadly within the spirit and scope of the present invention as defined in the appended claims. Therefore, changes may be made within the metes and bounds of the appended claims, as presently stated and as amended, without departing from the scope and spirit of the invention in its aspects.

## Claims

1. A method for enhancing a digital rights management (DRM) function of a data terminal, comprising:
receiving a request to reset a real-time clock (RTC);
receiving an updated RTC time from a user;
calculating and storing a difference value corresponding to a difference between a current RTC time and the updated RTC time; and
setting a current time of the data terminal based on the updated RTC time and
the stored difference value.

2. The method according to claim 1, further comprising:
determining whether data content can be used based on the current time and
a predetermined expiration time of the data content.

3. The method according to claim 2, wherein determining whether data content can be used comprises:
determining whether the current time is later than the predetermined expiration time; and
prohibiting usage of the data content if the current time is later than the predetermined expiration time.

4. The method according to claim 3, wherein determining whether data content can be used further comprises:
allowing usage of the data content if the current time is earlier than the predetermined expiration time of the data content.

5. The method according to claim 1, wherein the current time corresponds to a sum of the updated RTC time and the stored difference value.

6. The method according to claim 2, wherein the data content comprises at least one of a music file, a movie file, a game file, and a data application.

7. The method according to claim 2, wherein the predetermined expiration time of the data content is based on a time value set by a provider of the data content.

8. The method according to claim 1, wherein the data terminal comprises a mobile communication terminal that operates in at least one of a Global System for Mobile communication (GSM) system and a Wideband Code Division Multiple Access (WCDMA) system.

9. The method according to claim 1, wherein the data terminal comprises one of a mobile phone, a Personal Digital Assistant (PDA) and a computer.

10. A data terminal having an enhanced digital rights management (DRM) function, comprising:
a receiver that receives a request to reset a real-time clock (RTC) and an updated RTC time from a user;
a calculator that calculates and stores a difference value corresponding to a difference between a current RTC time and the updated RTC time; and
a current time setter that sets a current time of the data terminal based on the updated RTC time and the stored difference value.

11. The data terminal according to claim 10, further comprising a determiner that determines whether data content can be used based on the current time and a predetermined expiration time of the data content.

12. The data terminal according to claim 11, wherein the determiner determines whether the current time is later than the predetermined expiration time and prohibits usage of the data content if the current time is later than the predetermined expiration time.

13. The data terminal according to claim 12, wherein the determiner allows usage of the data content if the current time is earlier than the predetermined expiration time of the data content.

14. The data terminal according to claim 10, wherein the current time corresponds to a sum of the updated RTC time and the stored difference value.

15. The data terminal according to claim 11, wherein the data content comprises at least one of a music file, a movie file, a game file, and a data application.

16. The data terminal according to claim 11, wherein the predetermined expiration time of the data content is based on a time value set by a provider of the data content.

17. The data terminal according to claim 10, wherein the data terminal comprises a mobile communication terminal that operates in at least one of a Global System for Mobile communication (GSM) system and a Wideband Code Division Multiple Access (WCDMA) system.

18. The data terminal according to claim 10, wherein the data terminal comprises one of a mobile phone, a Personal Digital Assistant (PDA) and a computer.
